# EUROPEAN PATENT SPECIFICATION

(11) **EP 0 247 161 B1**
(45) Date of publication and mention of the grant of the patent: **07.04.1993**
(21) Application number: 86907219.9
(22) Date of filing: 24.11.1986
(51) Int. Cl.: C09D 11/00, C09D 11/06

(54) **INK JET INK COMPRISING DIBUTYL SEBACATE AND METHOD OF USING SAME**
DEKANDICABONSÄURE-DIBUTYLESTER ENTHALTENDE TINTE FÜR DAS TINTENSTRAHLSCHREIBVERFAHREN UND VERFAHREN ZU DEREN VERWENDUNG
ENCRE POUR IMPRIMANTES A JET D'ENCRE COMPRENANT DU SEBACATE DIBUTYLIQUE ET SON PROCEDE D'UTILISATION

(30) Priority: 22.11.1985 US 801015
(43) Date of publication of application: 02.12.1987
(73) Proprietor: DATAPRODUCTS CORPORATION, Woodland Hills California 91365 (US)
(72) Inventor: LIN, An-Chung R., New Town, CT 06470 (US); COOKE, Theodore M., Danbury, CT 06810 (US); MERRITT, Alfred R., Danbury, CT 06811 (US)
(74) Representative: Stanley, David William
(86) International application number: US8602536
(87) International publication number: WO8703292

(56) References cited:
- EP-A- 0 062 444
- FR-A- 1 446 176
- US-A- 3 653 932
- US-A- 4 390 369

## Description

The present application is related to U.S. Patent US-A-4,484,948 and U.S. Patent US-A-4,390,369 which are assigned to the assignee of the present application.

The present application is also related to U.S. Patent US-A-4,361,843 (EP-A-0 062 444), U.S. Patent-A-4,400,215 (GB-A-2 110 709) and U.S. Patent US-A-4,386,961 (EP-A- 0 082 672) which are assigned to the assignee of the present application.

The present invention relates to the field of ink jet inks, and more particularly to the field of ink jet inks which have been formulated for use in drop on demand ink jet printers.

Drop on demand ink jet printers present a number of unique problems which are not encountered by many other types of ink jet printers. For example, drop on demand ink jet printers may have to sit in a stand-by or cooled down mode for some period of time between printing cycles. Unlike continuous stream ink jet printers, which will "clean out" the ink which has been standing in the discharge orifice, drop on demand printers normally operate by beginning the printing cycle with such material. Accordingly, start-up problems are often encountered if the subject inks are not specially formulated to reduce such start-up problems. See for example, U.S. Patent-A-4,400,215 (GB-A-2 110 709), relating to methods and inks for reducing start-up problems.

IR readable inks are also known. See European application EP-A-147257 published July 3, 1985 assigned to Eastman Kodak, disclosing IR readable bar code ink jet inks comprising a dye, binder, solvent blend and specific IR absorbing compound. Another example of an IR readable ink used in a different context is disclosed in U.S. Patent US-A-4,069,179 (Jones) which discloses transfer elements comprising a substantially non-absorbent base having a coating comprising a continuous phase containing, as a discontinuous phase, a colorant carried by a vehicle comprising at least one C₁₂ to C₂₀ alcohol, said vehicle having a melting point below about 20^{o}C. A variety of colorants, including salts of dyes and pigments such as carbon black, and/or a nigrosine base colorant admixed with a fatty acid developer such as oleic acid are disclosed.

Other beneficial characteristics of drop on demand inks include the obtainable dot size and clarity of print generated by drop on demand printers. This problem is addressed in U.S. Patent US-A-4,361,843 (EP-A-0 062 444), which discloses that suitable drop on demand ink jet inks may comprise a mixture of oleic acid in an approximate weight of from 20 to 80 percent of the total mixture of the composition. The therein disclosed ink also includes a dye or a dye in a solvent. In this regard, also refer to Japanese patent application 017,758, filed February 22, 1977 to Toyo, Inc. Mfg.; and Japanese patent application 132,548, filed November 28, 1973 entitled "Ink Compositions for Ink Injection Type Recording Apparatus".

Various additives have been suggested for use with inks comprising oleic acid. See for example the above-mentioned U.S. patent, which discloses, inter alia the use of a solvent comprising benzyl alcohol and/or benzyl ether. Of course, these inks also disclose various colorants, including dyes such as typophor black, chinoline yellow, oil yellow, and nigrosine base. In this regard, it should be noted that typophor black as commonly provided comprises 30 weight percent of nigrosine and 70 weight percent of oleic acid. In U.S. Patent US-A-4,386,961 (EP-A-0 082 672), additional ink jet ink compositions are disclosed which comprise small proportions of oleic acid, and relatively larger proportions of benzyl alcohol and propylene glycol. Alternatively, formulations up to 10 percent oleic acid combined with diethylene glycol and methoxy triglycol together with a colorant and one or more additives are also disclosed in this U.S. patent.

Another approach which has been taken is the formulation of ink jet inks which are solid at room temperature. These include those described in U.S. Patent US-A-4,390,369 (GB-A-2 111 523) in related application Serial No. 644,542, filed August 27, 1984, entitled "High Molecular Weight, Hot Melt Impulse Ink Jet Ink", and, to the extent applicable, those ink compositions cited in connection with the prosecution of that patent and its related applications. For example, the Kurz and Berry patents, which relate to electrostatic printing processes, disclose the use of various inks including inks comprising didodecyl sebacate.

For further disclosure of ink jet inks, also please refer to European patent application 8330389.1 (EP-A-0 099 682), filed July 1, 1983. In accordance with this disclosure, the preferred fatty acid vehicle is oleic acid, which is described as comprising 10 to 97 weight percent of the subject ink. The subject ink further comprises 10 to 90 weight percent of a vehicle additive which may, for example, comprise benzyl alcohol, benzyl ether or any of a variety of other specified additives. The subject application further discloses that the preferred inks comprise 3-20, preferably 10-17, more preferably 15 weight percent of one or more vehicle-soluble dyes, such as chinoline yellow, nigrosine base, acetosol brown, orasol black, and oil yellow.

Notwithstanding the advances and disclosures represented in the aforementioned patents and patent applications, a need still exists for a liquid ink jet ink which is readily jettable by drop on demand ink jet printers, which is not susceptible to start-up problems after extended periods of printer inactivity, which produces a high print quality, and which otherwise exhibits beneficial ink jet ink characteristics.

### Summary of the Invention

The present invention provides a novel ink jet ink composition for use in drop on demand ink jet printers, said ink composition being liquid at room temperature and jettable at 50 - 70^{o}C with a viscosity of less than 15 centipoises (1.5 Pa.s) and comprising:
(a) 1 - 15 weight % of a colorant; and
(b) 85 - 99 weight % of a vehicle for the colorant, consisting essentially of:
   (i) 30 - 80 weight % dibutyl sebacate, and
   (ii) a balance of 20 - 70 weight % of oleic acid.

The subject ink exhibits excellent jet performance, with little or no start-up problems, and a frequency response equal to or exceeding 12kHz. The subject ink is very stable to the environment, exhibiting little moisture absorption and/or vehicle evaporation, and a very low corrosion rate. It also exhibits very low toxicity. Preferably, the ink comprises 12 weight percent of the colorant. More particularly, the preferred inks comprise 40 to 65, preferably 60 weight percent of dibutyl sebacate. The inks of the present invention are particularly adapted for printing infrared ("IR") readable bar codes. When the colorant used is an IR readable colorant, such as nigrosine base or typophor black, the preferred inks have been found to have an IR paper contrast signal greater than or equal to 0.75 on special paper. It is theorized that the dibutyl sebacate, which is a plasticizer, acts to control migration of the colorant to encourage vertical penetration into the printing substrate. It is further theorized that start-up problems are minimized by reason of the selection of well matched ink components which do not have high evaporation rates, and which do not evaporate at appreciably differential rates from the ink jet nozzle.

Accordingly, another aspect of the present invention provides a novel method of ink jet printing using a drop on demand jetting apparatus, comprising the steps of:
(a) providing an ink composition that is liquid at room temperature and comprises:
   (i) 1 - 15 weight % of a colorant; and
   (ii) 85 - 99 weight % of a vehicle consisting essentially of 30 - 80 weight % dibutyl sebacate, and a balance of 20 - 70 weight % of oleic acid;
(b) heating the ink composition to 50 - 70^{o}C to reduce its viscosity to less than 15 centipoises (1.5Pa.s); and
(c) jetting the ink composition from the jetting apparatus to form indicia on a substrate.

### Description of the Preferred Embodiments

The present invention provides a novel ink jet ink composition for use on drop on demand ink jet printers. Such drop on demand ink jet printers are those wherein the ink is stored in the print head or nozzle until it is necessary to generate indicia on a print substrate, whereupon the apparatus is activated to discharge a selected number of droplets directly onto the print or target substrate. As used herein, the term "drop on demand" is intended to include impulse ink jet printers, but to exclude continuous ink jet printers, and/or electrostatic ink printers, which function in different manners to achieve jet printing.

The preferred ink of the present invention comprises a vehicle consisting essentially of 30 to 80 weight percent dibutyl sebacate and 20 to 70 weight percent oleic acid. This vehicle comprises 85-99 weight percent of the subject ink. Dibutyl sebacate (n-Decanedioic acid di-n-butyl ester) is an ester having the chemical formula: H₉C₄OOC(CH₂)₈COOC₄H₉. Its boiling point at 4 mmHg (533Pa) is 367-381^{o}F (186-194^{o}C). Its vapor pressure at 200^{o}C is 10 mmHg (1333Pa). Dibutyl sebacate is a pale yellow liquid with low odor at room temperature which is slightly soluble in water. Its evaporation rate (nBuAc=1) is negligible (approx. 0). In the preferred embodiment the dibutyl sebacate comprises between 40 to 65 weight percent, preferably 60 weight percent of said ink. Although less preferred, the subject ink may further comprise up to 30 weight percent of an ink additive, such as a solvent or other ink additive. Benzyl ether in amounts up to 30, more preferably up to 20, weight per cent is currently preferred for this purpose. Benzyl ether (dibenzyl ether) is a colorless/pale yellow liquid at room temperature, having a boiling point of 295^{o} (dec) C. at 760 mmHg (101325Pa), which is insoluble in water. Alternate, less preferred ink additives may be selected from the group consisting of n-methyl pyrrolidone, benzyl alcohol, methoxy triglycol, diethylene glycol, and mixtures thereof. Various other ink additives are well known in the art, and may be utilized for the purpose of altering the viscosity of the subject ink, improving its penetration or drying characteristics, or for other known purposes.

This preferred ink further comprises 1 to 15 weight percent of a colorant. The preferred colorant comprises nigrosine base, which may be provided in the form of typophor black, which itself is a mixture of oleic acid and nigrosine.

Other colorants which may be used in the subject inks include one or more vehicle soluble dyes including chinoline yellow, acetosol brown, orasol black and oil yellow. Nigrosine base and typophor black dyes are particularly suitable for use in the present ink to produce infrared readable indicia, since they have been found to have a wide spectrum absorption range of from at least 500 nm to 900 nm. Bar code print made using these inks has shown very good readability by an infrared reader operating at 940 nm, and by a visible reader by most commercial bar code readers, which generally operate in the 600 nm to 960 nm range.

In the following Table 1, four inks within the scope of the invention (examples 4-7) are disclosed, of which formulations 6 and 7 are presently preferred. Examples 1-3 in this Table are set forth for purposes of comparison. In the following Table, formulas 1 and 2 are jettable, but have start-up (first droplet formulation after idle for a period of time) problems. The print produced thereby is IR readable. By contrast, formulations numbers 6 and 7 have improved jet performance, exhibiting virtually no start-up problems at room temperatures. Ink formulation numbers 3 to 5 vary in performance between the inks of formula 1 (which is worst) and that of formula 7 (which is currently believed to be the best formula).

**TABLE 1**

| INK # | | 1 | 2 | 3 | 4 | 5 | 6 | 7 |
|---|---|---|---|---|---|---|---|---|
| Diethylene Glycol | | 20 | 34 | -- | -- | -- | -- | -- |
| Oleic Acid | | 35 | 10 | 28 | 28 | 35 | 28 | 28 |
| Dibutyl Sebacate | | -- | -- | -- | 40 | 33 | 40 | 60 |
| Methoxy Triglycol | | 35 | 34 | 60 | 20 | 20 | -- | -- |
| Benzyl Ether | | -- | -- | -- | -- | -- | 20 | -- |
| Nigrosine Base | | 10 | -- | 12 | 12 | 12 | 12 | 12 |
| Typophor Block | | -- | 22 | -- | -- | -- | -- | -- |
| Viscosity | 25^{o}C | 40 | -- | 30.5 | 32.3 | 33.5 | 30.7 | 36.4 |
| | 55^{o}C | 13.5 | -- | 10.7 | 11.6 | 14.3 | 12.3 | 13.6 (57^{o}C) |
| Surface Tension 25^{o}C | | -- | -- | -- | -- | -- | 32.1 | 30.6 |

Inks of the present invention are generally designed to be jetted at temperatures of between 50^{o} and 70^{o} Centigrade, at which temperatures suitable jetting viscosities of less than 15 centipoises (1.5 Pa.s), preferably in the range of 10-13 centipoises (1.0-1.3 Pa.s), are easily obtained. The ink of formula number 7 is particularly preferred because of its infrared readable characteristics, exhibiting a paper contrast signal equal to in excess of 0.75 on special paper, excellent jet performance, exhibiting little or no start-up difficulty at room temperature and a frequency response of greater than or equal to 12kHz; very good stability to the environment exhibiting little moisture absorption or vehicle evaporation; very low corrosion rate, and very low toxicity. The aforementioned paper contrast signal (PCS), is determined by subtracting the reflectance of the print from the reflectance of the paper, and dividing the result by the reflectance of the paper. The special paper used for these tests was a barium sulfate (baryata) coated paper. This paper is available from the Sholler Paper Company (Pulaski, New York). It is coated with a fine layer of barium sulfate, sufficient to reduce the lateral spread of the dots using the subject ink, and thereby improving the dot size control and clarity of the subject bar codes.

In determining the aforementioned "start-up" characteristics, measurement was taken of the ink droplet velocities before and after the ink droplet machine was permitted to stand idle for a period of time. The results obtained using ink formula number 7 above is listed in Table 2.

**TABLE 2**

| Idle Time | Droplet Velocity (m/sec) |
|---|---|
| 0 | 9.5 ± 0.8 |
| 16 hrs. | 9.8 ± 1.2 |
| 48 hrs. | 9.0 ± 0.8 |

As seen from the above Table, formula number 7 exhibits no noticeable start-up problem after standing for two days. By comparison, formulas 1 and 2 as set forth in Table 1 have unstable jet performance after the printer is permitted to stand idle for more than 4 hours, thereby making any velocity measurements meaningless.

## Claims

1. An ink jet ink composition for use in drop on demand ink jet printers, said ink composition being liquid at room temperature and jettable at 50 - 70°C with a viscosity of less than 15 centipoises (1.5 Pa.s) and comprising:
(a) 1- 15 weight % of a colorant ; and
(b) 85 - 99 weight % or a vehicle for the colorant. consisting essentially of:
(i) 30 - 80 weight % dibutyl sebacate, and
(ii) a balance or 20 - 70 weight % of oleic acid.

2. The ink composition of claim 1 wherein said dibutyl sebacate comprises between 40 to 65 weight percent of said ink.

3. The ink composition of claim 1 wherein said dibutyl sebacate comprises 60 weight percent of said ink.

4. The ink composition of claim 1 wherein said colorant comprises nigrosine base.

5. The ink composition of claim 1 wherein said colorant comprises typophor black.

6. The ink composition of claim 1 wherein said colorant comprises 12 weight percent of said ink.

7. The ink of claim 1 wherein said ink comprises up to 30 weight percent of an ink additive.

8. The ink of claim 1 wherein said ink further comprises up to 30 weight percent of benzyl ether as an ink additive.

9. The ink of claim 8 wherein said ink additive comprises 20 weight percent of benzyl ether.

10. A method of ink jet printing using a drop on demand jetting apparatus, comprising the steps of:
(a) providing an ink composition that is liquid at room temperature and comprises:
(i) 1- 15 weight % of a colorant ; and
(ii) 85 - 99 weight % of a vehicle consisting essentially of 30 - 80 weight % dibutyl sebacate, and a balance of 20 - 70 weight % of oleic acid;
(b) heating the ink composition to 50 - 70 °C to reduce its viscosity to less than 15 centipoise (1.5 Pa.s); and
(c) jetting the ink composition from the jetting apparatus to form indicia on a substrate.

11. The method of claim 10 wherein said colorant is selected to be infrared readable.

12. The method of claim 11 wherein said indicia are bar codes.

13. The method of claim 10 wherein said substrate is selected to be a barium sulfate coated substrate.

## Patentansprüche

1. Tintenstrahltintenzusammensetzung für die Verwendung in bei Bedarf Tropfen bildenden Tintenstrahldruckern, wobei die Tintenzusammensetzung bei Raumtemperatur flüssig ist, bei 50 - 70°C mit einer Viskosität von weniger als 15 Centipoise (1,5 Pa.s) strahlbar ist und
(a) 1 - 15 Gew.% Färbemittel und
(b) 85 - 99 Gew.% Träger für das Färbemittel umfaßt, der im wesentlichen aus
(i) 30 - 80 Gew.% Dibutylsebacat und
(ii) einem Rest von 20 - 70 Gew.% Ölsäure besteht.

2. Tintenzusammensetzung nach Anspruch 1, bei der das Dibutylsebacat 40 - 65 Gew.% der Tinte ausmacht.

3. Tintenzusammensetzung nach Anspruch 1, bei der das Dibutylsebacat 60 Gew.% der Tints ausmacht.

4. Tintenzusammensetzung nach Anspruch 1, bei der das Färbemittel Nigrosinbase umfaßt.

5. Tintenzusammensetzung nach Anspruch 1, bei der das Färbemittel Typophorschwarz umfaßt.

6. Tintenzusammensetzung nach Anspruch 1, bei der das Färbemittel 12 Gew.% der Tinte ausmacht.

7. Tinte nach Anspruch 1, die bis zu 30 Gew.% Tintenadditiv umfaßt.

8. Tinte nach Anspruch 1, die außerdem bis zu 30 Gew.% Benzylether als Tintenadditiv umfaßt.

9. Tinte nach Anspruch 8, bei der das Tintenadditiv 20 Gew.% Benzylether umfaßt.

10. Verfahren zum Tintenstrahldrucken unter Verwendung eines bei Bedarf Tropfen bildenden Strahlgeräts, bei dem
(a) eine Tintenzusammensetzung bereitgestellt wird, die bei Raumtemperatur flüssig ist und
(i) 1 - 15 Gew.% Färbemittel und
(ii) 85 - 99 Gew.% Träger umfaßt, der im wesentlichen aus 30 - 80 Gew.% Dibutylsebacat und einem Rest von 20 - 70 Gew.% Ölsäure besteht,
(b) die Tintenzusammensetzung auf 50 - 70°C erhitzt wird, um ihre Viskosität auf weniger als 15 Centipoise (1,5 Pa.s) zu verringern, und
(c) die Tintenzusammensetzung aus dem Strahlgerät abgestrahlt wird, um auf einem Substrat Zeichen zu bilden.

11. Verfahren nach Anspruch 10, bei dem das Färbemittel so ausgewählt ist, daß es im Infraroten lesbar ist.

12. Verfahren nach Anspruch 11, bei dem die Zeichen Strichmarkierungen sind.

13. Verfahren nach Anspruch 10, bei dem das Substrat so ausgewählt ist, daß es ein mit Bariumsulfat beschichtetes Substrat ist.

## Revendications

1. Composition d'encre pour jet d'encre, destinée à être utilisée dans des imprimantes à jet d'encre activées à la demande, ladite composition d'encre étant liquide à température ambiante et pouvant être projetée à 50-70°C avec une viscosité inférieure à 15 centipoises (1,5 Pa.s), et comprenant :
(a) 1-15% en poids d'un colorant; et
(b) 85-99% en poids d'un véhicule pour le colorant, constitué essentiellement de :
(i) 30-80% en poids de sébacate de dibutyle, et
(ii) le reste formé de 20-70% en poids d'acide oléïque.

2. Composition d'encre selon la revendication 1, dans laquelle ledit sébacate de dibutyle constitue entre 40 à 65 pour cent en poids de ladite encre.

3. composition d'encre selon la revendication 1, dans laquelle ledit sébacate de dibutyle forme 60 pour cent en poids de ladite encre.

4. Composition d'encre selon la revendication 1, dans laquelle ledit colorant comprend une base formée de nigrosine.

5. Composition d'encre selon la revendication 1, dans laquelle ledit colorant comprend du noir typophor.

6. Composition d'encre selon la revendication 1, dans laquelle ledit colorant constitue 12 pour cent en poids de ladite encre.

7. Composition d'encre selon la revendication 1, dans laquelle ladite encre comprend jusqu'à 30 pour cent en poids d'un additif d'encre.

8. Composition d'encre selon la revendication 1, dans laquelle ladite encre comprend en outre jusqu'à 30 pour cent en poids d'éther de benzyle en tant qu'additif.

9. Composition d'encre selon la revendication 8, dans laquelle ledit additif de l'encre comprend 20 pour cent en poids d'éther de benzyle.

10. Procédé d'impression à jet d'encre utilisant un dispositif de projection d'encre activé à la demande, comprenant les étapes suivantes :
(a) utilisation d'une composition d'encre qui est liquide à la température ambiante et comprend :
(i) 1-15% en poids d'un colorant; et
(ii) 85-99% en poids d'un véhicule constitué essentiellement de 30-80% en poids de sébacate de dibutyle et le reste formé de 20-70% d'acide oléïque;
(b) chauffage de la composition d'encre à 50-70°C pour réduire sa viscosité à moins de 15 centipoises (1,5 Pa.s); et
(c) projection de la composition d'encre par le dispositif de projection pour former des marques sur un substrat.

11. Procédé selon la revendication 10, dans lequel ledit colorant est choisi de manière à être lisible par infrarouge.

12. Procédé selon la revendication 11, selon lequel lesdites marques sont des codes à barres.

13. Procédé selon la revendication 10, selon lequel on choisit pour ledit substrat un substrat recouvert de sulfate de barium.
